# EUROPEAN PATENT APPLICATION

(11) **EP 2 842 919 A1**
(43) Date of publication of application: **04.03.2015**
(21) Application number: 13780817.6
(22) Date of filing: 24.04.2013
(51) Int. Cl.: C03C 3/112, C03B 1/00, C03B 5/225

(54) **NON-ALKALI GLASS AND METHOD FOR PRODUCING SAME**

(30) Priority: 27.04.2012 JP 2012103237
(71) Applicant: Asahi Glass Company, Limited, Tokyo 100-8405 (JP)
(72) Inventor: TOKUNAGA Hirofumi, Tokyo 100-8405 (JP); URATA Shingo, Tokyo 100-8405 (JP); KOIKE Akio, Tokyo 100-8405 (JP); NISHIZAWA Manabu, Tokyo 100-8405 (JP); ENOMOTO Takashi, Tokyo 100-8405 (JP); TSUJIMURA Tomoyuki, Tokyo 100-8405 (JP)
(74) Representative: Müller-Boré & Partner Patentanwälte PartG mbB
(86) International application number: PCT/JP2013/062120
(87) International publication number: WO 2013/161903

(57) **Abstract**

The present invention relates to a non-alkali glass having a strain point of 710°C or higher, an average thermal expansion coefficient at from 50 to 300°C of from 30×10⁻⁷ to 43x 10⁻⁷/°C, a temperature T₂ at which glass viscosity reaches 10² dPa·s of 1,710°C or lower, a temperature T₄ at which the glass viscosity reaches 10⁴ dPa·s of 1,320°C or lower, containing, indicated by percentage by mass on the basis of oxides, SiO₂ 58.5 to 67.5, Al₂O₃ 18 to 24, B₂O₃ 0 to 1.7, MgO 6.0 to 8.5, CaO 3.0 to 8.5, SrO 0.5 to 7.5, BaO 0 to 2.5 and ZrO₂ 0 to 4.0, containing Cl in an amount of from 0.15 to 0.35% by mass, F in an amount of from 0.01 to 0.15% by mass and SO₃ in an amount of from 1 to 25 ppm and having a β-OH value of the glass of from 0.15 to 0.45 mm⁻¹, in which (MgO/40.3)+(CaO/56.1)+(SrO/103.6)+(BaO/153.3) is from 0.27 to 0.35, (MgO/40.3)/((MgO/40.3)+(CaO/56.1)+(SrO/103.6)+(BaO/153.3)) is 0.40 or more, (MgO/40.3)/((MgO/40.3) +(CaO56.1)) is 0.40 or more, and (MgO/40.3)/((MgO/40.3) +(SrO/103.6)) is 0.60 or more.

## Description

### TECHNICAL FIELD

The present invention relates to a non-alkali glass that is suitable as various display substrate glasses and photomask substrate glasses, does not substantially contain an alkali metal oxide and is float-formable; and method for producing the same.

### BACKGROUND ART

In various display substrate glasses, particularly ones on whose surfaces a metal or oxide thin film is formed, the following characteristics have been conventionally required.
(1) Not substantially containing alkali metal ions; because in the case where an alkali metal oxide is contained, alkali metal ions diffuse in the thin film, resulting in deterioration of film characteristics.
(2) Having a high strain point so that deformation of a glass and shrinkage (thermal shrinkage) due to structure stabilization of the glass can be minimized when exposed to high temperature in a thin film formation step.
(3) Having sufficient chemical durability to various chemicals used in semiconductor formation; in particular, having durability to buffered hydrofluoric acid (BHF: mixed liquid of hydrofluoric acid and ammonium fluoride) for etching SiOₓ or SiNₓ, a chemical solution containing hydrochloric acid used for etching of ITO, various acids (nitric acid, sulfuric acid and the like) used for etching of an metal electrode, and an alkaline of a resist removing liquid.
(4) Having no defects (bubbles, striae, inclusions, pits, flaws, etc.) in the inside and on the surface.
   In addition to the above requirements, the glass is in the following situations, in recent years.
(5) Reduction in weight of a display is required, and the glass itself is also required to be a glass having a small density.
(6) Reduction in weight of a display is required, and a decrease in thickness of the substrate glass is desired.
(7) In addition to conventional amorphous silicon (a-Si) type liquid crystal displays, polycrystal silicon (p-Si) type liquid crystal displays requiring a slightly high heat treatment temperature have come to be produced (a-Si: about 350°C → p-Si: 350 to 550°C).
(8) In order to improve productivity and increase thermal shock resistance by increasing the rate of rising and falling temperature in heat treatment for preparation of a liquid crystal display, the glass having a small average thermal expansion coefficient is required.

On the other hand, dry etching has prevailed, and requirement of BHF resistance has come to be weakened. As conventional glasses, many glasses containing B₂O₃ in an amount of from 6 to 10 mol% have been used in order to improve BHF resistance. However, B₂O₃ has a tendency to decrease the strain point. As examples of non-alkali glasses containing no or only small amount of B₂O₃, there are the following ones:

Patent Document 1 discloses a SiO₂-Al₂O₃-SrO glass containing no B₂O₃. However, the temperature required for melting is high, which causes a difficulty in production.

Patent Document 2 discloses a SiO₂-Al₂O₃-SrO crystallized glass containing no B₂O₃. However, the temperature required for melting is high, which causes a difficulty in production.

Patent Document 3 discloses a glass containing B₂O₃ in an amount of from 0 to 3% by weight. However, the strain point in Examples thereof is 690°C or lower.

Patent Document 4 discloses a glass containing B₂O₃ in an amount of from 0 to 5 mol%. However, the average thermal expansion coefficient thereof at from 50 to 300°C exceeds 50×10⁻⁷/°C.

Patent Document 5 discloses a glass containing B₂O₃ in an amount of from 0 to 5 mol%. However, the thermal expansion thereof is large, and the density thereof is also high.

In order to solve the problems in the glasses described in Patent Documents 1 to 5, a non-alkali grass described in Patent Document 6 is proposed. The non-alkali grass described in Patent Document 6 is considered to have a high strain point, to be able to be formed by a float process, and to be suitable for use in display substrates, photomask substrates and the like.

However, there is a solid phase crystallization method as a method for producing a high quality p-Si TFT. And in order to perform this method, it is required to further increase the strain point.

On the other hand, from a request in a glass production process, particularly melting and forming, it has been required to decrease viscous properties of the glass, particularly the temperature T₄ at which glass viscosity reaches 10⁴ dPa·s.

In the various display substrate glasses and photomask substrate glasses, the requirement to the quality of (4) described above is severe. In order to satisfy the requirement to the quality of (4) described above, there is a method of adding a clarifying agent and melting the glass to perform clarification (Patent Document 7). In Patent Document 7, any one or more of Sb₂O₃, SO₃, Fe₂O₃ and SnO₂ and either one or more of F and Cl are added as the clarifying agents in effective amounts.

Further, in Patent Document 7, combined use of reduced pressure at the time of clarification is also proposed. This is called a reduced-pressure defoaming method, and is a method of introducing a glass melt into a reduced-pressure atmosphere, allowing to glow bubbles in a continuously flowing melt glass flow large under the reduced-pressure atmosphere to raise the bubbles contained in the glass melt, and breaking the bubbles to remove them.

### PRIOR ART DOCUMENTS

### PATENT DOCUMENTS

Patent Document 1: JP-A-62-113735
Patent Document 2: JP-A-62-100450
Patent Document 3: JP-A-4-325435
Patent Document 4: JP-A-5-232458
Patent Document 5: U.S. Patent 5326730
Patent Document 6: JP-A-10-45422
Patent Document 7: JP-A-10-324526

### SUMMARY OF THE INVENTION

### PROBLEMS THAT THE INVENTION IS TO SOLVE

An object of addition of the clarifying agent is mainly for a clarifying effect at the time of melting glass raw materials. However, in order to satisfy the requirement to the quality of (4) described above, it is necessary to suppress bubbles newly generated after a clarification reaction.

As an example of a generation source of the new bubbles after the clarification reaction, there are reboil bubbles caused by stirring. For the purpose of improving homogeneity of the melt glass, it has hitherto been performed to provide a stirring device in a flow path of the glass melt and stir the glass melt. The reboil bubbles (hereinafter referred to as "stirring reboil bubbles" in this specification) are generated in the glass melt by this stirring.

As another example of the generation source of the new bubbles after the clarification reaction, there are interface bubbles (hereinafter referred to as "platinum interface bubbles" in this specification) generated at an interface between a platinum material used in a flow path of the glass melt and the glass melt.

Further, when the reduced-pressure defoaming method is used, it is necessary to pay attention to a decrease in clarification function due to enlargement of a bubble layer. At the time when the reduced-pressure defoaming method is performed, the bubble layer usually present on a surface of the glass melt at about 10 mm or less is sometimes enlarged to 10 mm to hundreds of millimeters. When enlargement of the bubble layer occurs, bubbles that have reached the surface of the glass melt, which usually disappear with time, form a layer without being broken, thereby being stably present for a long period of time. Accordingly, the clarification function is decreased.

An object of the present invention is to provide a non-alkali glass that solves the above-mentioned disadvantages, has a high strain point and a low viscosity, particularly a low temperature T₄ at which glass viscosity reaches 10⁴ dPa·s, is easily float-formable, and has excellent clarification function at the time of glass production.

### MEANS FOR SOLVING THE PROBLEMS

The present invention provides a non-alkali glass having a strain point of 710°C or higher, an average thermal expansion coefficient at from 50 to 300°C of from 30×10⁻⁷ to 43 x 10⁻⁷/°C, a temperature T₂ at which glass viscosity reaches 10² dPa·s of 1,710°C or lower, a temperature T₄ at which the glass viscosity reaches 10⁴ dPa·s of 1,320°C or lower, containing, indicated by percentage by mass on the basis of oxides,

| | |
|---|---|
| SiO₂ | 58.5 to 67.5, |
| Al₂O₃ | 18 to 24, |
| B₂O₃ | 0 to 1.7, |
| MgO | 6.0 to 8.5, |
| CaO | 3.0 to 8.5, |
| SrO | 0.5 to 7.5, |
| BaO | 0 to 2.5 and |
| ZrO₂ | 0 to 4.0, |

containing Cl in an amount of from 0.15 to 0.35% by mass, F in an amount of from 0.01 to 0.15% by mass and SO₃ in an amount of from 1 to 25 ppm and having a β-OH value of the glass of from 0.15 to 0.45 mm⁻¹,
in which (MgO/40.3)+(CaO/56.1)+(SrO/103.6)+(BaO/153.3) is from 0.27 to 0.35, (MgO/40.3)/((MgO/40.3)+(CaO/56.1)+(SrO/103.6)+(BaO/153.3)) is 0.40 or more, (MgO/40.3)/((MgO/40.3) +(CaO/56.1)) is 0.40 or more, and (MgO/40.3)/((MgO/40.3) +(SrO/103.6)) is 0.60 or more.

The present invention provides a non-alkali glass having a strain point of 710°C or higher, an average thermal expansion coefficient at from 50 to 300°C of from 30×10⁻⁷ to 43×10⁻⁷/°C, a temperature T₂ at which glass viscosity reaches 10²dPa·s of 1,710°C or lower, a temperature T₄ at which the glass viscosity reaches 10⁴ dPa·s of 1,320°C or lower, containing, indicated by percentage by mass on the basis of oxides,

| | |
|---|---|
| SiO₂ | 58 to 66.5, |
| Al₂O₃ | 18 to 24, |
| B₂O₃ | 0 to 1.7, |
| MgO | 3.0 to less than 6.0, |
| CaO | 3.0 to 10, |
| SrO | 0.5 to 7.5, |
| BaO | 0 to 2.5 and |
| ZrO₂ | 0 to 4.0, |

containing Cl in an amount of from 0.15 to 0.35% by mass, F in an amount of from 0.01 to 0.15% by mass and SO₃ in an amount of from 1 to 25 ppm and having a β-OH value of the glass of from 0.15 to 0.45 mm⁻¹,
in which (MgO/40.3)+(CaO/56.1)+(SrO/103.6)+(BaO/153.3) is from 0.27 to 0.35, (MgO/40.3)/((MgO/40.3)+(CaO/56.1)+(SrO/103.6)+(Ba0/153.3)) is 0.40 or more, (MgO/40.3)/((MgO/40.3) +(CaO56.1) is 0.40 or more, (MgO/40.3)/((MgO/40.3) +(Sr/103.6)) is 0.60 or more, and (Al₂O₃×100/102)×(MgO/40.3)/((MgO/40.3)+(CaO/56.1)+(SrO/103.6)+(BaO/153.3)) is 8.2 or more.

### ADVANTAGEOUS EFFECTS OF INVENTION

The non-alkali glass of the present invention is suitable particularly for display substrates, photomask substrates and the like for use at a high strain point, and further, is an easily float-formable glass.

### BRIEF DESCRIPTION OF THE DRAWINGS

[Fig. 1] Fig. 1 is a graph showing a relationship between the retention time and the number of residual bubbles at the time when the temperature of glass melts is maintained at 1550°C, with respect to Examples 1 and 2 and Comparative Examples 1 and 2.
[Fig. 2] Fig. 2 is a graph showing a relationship between the retention time and the number of residual bubbles at the time when the temperature of glass melts is maintained at 1670°C, with respect to Examples 1 and 2 and Comparative Examples 1 and 2.
[Fig. 3] Fig. 3 is a graph showing a relationship between the retention time and the number of residual bubbles at the time when the temperature of glass melts is maintained at 1550°C, with respect to Examples 3 and 4 and Comparative Examples 3 and 4.
[Fig. 4] Fig. 4 is a graph showing a relationship between the retention time and the number of residual bubbles at the time when the temperature of glass melts is maintained at 1670°C, with respect to Examples 3 and 4 and Comparative Examples 3 and 4.
[Fig. 5] Fig. 5 is a graph showing a relationship between the β-OH value of a glass and the interface bubble volume, with respect to Reference Examples 1 and 2.

### MODE FOR CARRYING OUT THE INVENTION

The composition range of each component is described below.

SiO₂ increases meltability of a glass, decreases the thermal expansion coefficient and increases the strain point. In a first embodiment of the non-alkali glass of the present invention, the SiO₂ content is from 58.5% (% by mass, hereinafter the same unless otherwise noted) to 67.5%. In the case of less than 58.5%, the strain point is not sufficiently increased, the thermal expansion coefficient is increased, and the density is increased. It is preferably 59% or more, and more preferably 60% or more. In the case of exceeding 67.5%, the meltability is decreased and the devitrification temperature is increased. It is preferably 67% or less, more preferably 66% or less, and particularly preferably 65% or less.

On the other hand, in a second embodiment of the non-alkali glass of the present invention, the SiO₂ content is from 58% to 66.5%. In the case of less than 58%, the above-mentioned effects due to SiO₂ do not sufficiently appear. It is preferably 59% or more, and more preferably 60% or more. In the case of exceeding 66.5%, the meltability is decreased and the devitrification temperature is increased. It is preferably 66% or less, more preferably 65.5% or less, and particularly preferably 65% or less.

Al₂O₃ suppresses phase separation properties of the glass, decreases the thermal expansion coefficient and increases the strain point. However, in the case of less than 18%, these effects do not appear, resulting in increasing other components for increasing expansion. As a result, thermal expansion becomes large. It is preferably 19.5% or more, and more preferably 20% or more. In the case of exceeding 24%, there is a concern that the meltability of the glass is deteriorated, or that the devitrification temperature is increased. It is preferably 23% or less, more preferably 22.5% or less, and still more preferably 22% or less.

B₂O₃ improves melting reactivity of the glass and decreases the devitrification temperature, and therefore can be added up to 1.7%. However, too much causes a decrease in the strain point. It is therefore preferably 1.5% or less, more preferably 1.3% or less, and particularly preferably 0.9% or less. Considering environmental load, it is preferred that B₂O₃ is not substantially contained. The term "not substantially contained" means that it is not contained except for inevitable impurities.

MgO has characteristics that it does not increase expansion and does not excessively decrease the strain point, among alkali earths, and also improves the meltability.

In the first embodiment of the non-alkali glass of the present invention, the MgO content is from 6.0% to 8.5%. In the case of less than 6.0%, the above-mentioned effects due to addition of MgO do not sufficiently appear. However, in the case of exceeding 8.5%, there is a concern that the devitrification temperature is increased. It is preferably 8.0% or less, more preferably 7.5% or less, and still more preferably 7.0% or less.

On the other hand, in the second embodiment of the non-alkali glass of the present invention, the MgO content is from 3.0% to less than 6.0%. In the case of less than 3.0%, the above-mentioned effects due to addition of MgO do not sufficiently appear. It is more preferably 3.8% or more, and still more preferably 4.2% or more. However, in the case of 6.0% or more, there is a concern that the devitrification temperature is increased. It is more preferably 5.8% or less.

CaO has characteristics that it does not increase expansion and does not excessively decrease the strain point, next to MgO, among alkali earths, and also improves the meltability.

In the first embodiment of the non-alkali glass of the present invention, the CaO content is from 3.0% to 8.5%. In the case of less than 3.0%, the above-mentioned effects due to addition of CaO do not sufficiently appear. It is preferably 3.5% or more, and more preferably 4.0% or more. However, in the case of exceeding 8.5%, there is a concern that the devitrification temperature is increased, or that phosphorus that is an impurity in limestone (CaCO₃) as a raw material of CaO is incorporated in a large amount. It is preferably 8.0% or less, more preferably 7.5% or less, and still more preferably 7.0% or less.

On the other hand, in the second embodiment of the non-alkali glass of the present invention, the CaO content is from 3.0% to 10.0%. In the case of less than 3.0%, the above-mentioned effects due to addition of CaO do not sufficiently appear. It is preferably 4.0% or more, and more preferably 4.5% or more. However, in the case of exceeding 10%, there is a concern that the devitrification temperature is increased, or that phosphorus that is an impurity in limestone (CaCO₃) as a raw material of CaO is incorporated in a large amount. It is preferably 9.0% or less, more preferably 8.0% or less, still more preferably 7.5% or less, and yet still more preferably 7.0% or less.

SrO improves the meltability without increasing the devitrification temperature of the glass. However, in the case of less than 0.5%, this effect does not sufficiently appear. It is preferably 1.0% or more, more preferably 1.5% more, and still more preferably 2.0% or more. However, in the case of exceeding 7.5%, there is a concern that the thermal expansion coefficient is increased. It is preferably 7.3% or less, and more preferably 7.0% or less.

BaO is not essential, but can be contained in order to improve the meltability. However, too much causes excessive increases in expansion and density of the glass, so that the content thereof is 2.5% or less. It is more preferably less than 1% or 0.5% or less, and further, it is preferred that BaO is not substantially contained.

ZrO₂ may be contained up to 4.0% in order to decrease the glass melting temperature or to promote crystal precipitation at the time of burning. In the case of exceeding 4.0%, the glass becomes unstable, or the dielectric constant ε of the glass is increased. It is preferably 2.0% or less, more preferably 1.5% or less, still more preferably 1.0% or less and yet still more preferably 0.5% or less, and it is preferred that ZrO₂ is not substantially contained.

In the first embodiment of the non-alkali glass of the present invention, there is a concern that when the total amount of respective values indicated by percentage by mass of MgO, CaO, SrO and BaO divided by respective molecular weights, that is to say, (MgO/40.3)+ (CaO/56.1)+ (SrO/103.6)+(BaO/153.3), is smaller than 0.27, the meltability is deteriorated, whereas when it is larger than 0.35, a drawback of failing to decrease the thermal expansion coefficient occurs. It is preferably 0.28 or more, and more preferably 0.29 or more.

On the other hand, in the second embodiment of the non-alkali glass of the present invention, there is a concern that when (MgO/40.3)+(CaO/56.1)+(SrO/103.6)+(BaO/153.3) is smaller than 0.28, the meltability is deteriorated, whereas when it is larger than 0.35, a drawback of failing to decrease the thermal expansion coefficient occurs. It is preferably 0.29 or more.

Physical properties such as the meltability and the devitrification temperature vary with the atom ratio of alkali earth metals, so that it is effective to be specified by the respective values indicated by percentage by mass of MgO, CaO, SrO and BaO divided by respective molecular weights.

In the first embodiment of the non-alkali glass of the present invention, when the total amount of respective values indicated by percentage by mass of MgO, CaO, SrO and BaO divided by respective molecular weights, that is to say, (MgO/40.3)+(CaO/56.1)+ (SrO/103.6)+(BaO/153.3), satisfies the above and the following 3 requirements are also satisfied, the strain point can be increased, and the viscous properties of the glass, particularly the temperature T₄ at which glass viscosity reaches 10⁴ dPa·s can be decreased without increasing the devitrification temperature.

(MgO/40.3)/((MgO/40.3)+(CaO/56.1)+(SrO/103.6)+(BaO/153.3)) is 0.40 or more, preferably 0.42 or more, and more preferably 0.45 or more.

(MgO/40.3)/((MgO/40.3)+(CaO/56.1)) is 0.40 or more, preferably 0.45 or more, and more preferably 0.50 or more.

(MgO/40.3)/((MgO/40.3)+(SrO/103.6)) is 0.60 or more, and preferably 0.65 or more.

In the second embodiment of the non-alkali glass of the present invention, when the total amount of respective values indicated by percentage by mass of MgO, CaO, SrO and BaO divided by respective molecular weights, that is to say, (MgO/40.3)+(CaO/56.1)+ (SrO/103.6)+ (BaO/153.3), satisfies the above and the following 3 requirements are also satisfied, the strain point can be increased, and the viscous properties of the glass, particularly the temperature T₄ at which glass viscosity reaches 10⁴ dPa·s can be decreased without increasing the devitrification temperature.

(MgO/40.3)/((MgO/40.3)+(CaO/56.1)+(SrO/103.6)+(BaO/153.3)) is 0.25 or more, preferably 0.40 or more, more preferably 0.42 or more, and particularly preferably 0.45 or more.

(MgO/40.3)/((MgO/40.3)+(CaO/56.1)) is 0.30 or more, preferably 0.40 or more, more preferably 0.45 or more, and particularly preferably 0.50 or more.

(MgO/40.3)/((MgO/40.3)+(SrO/103.6)) is 0.60 or more, and preferably 0.65 or more.

In the second embodiment of the non-alkali glass of the present invention, when (Al₂O₃×100/102)×(MgO/40.3)/((MgO/40.3)+(CaO/56.1)+(SrO/103.6)+(BaO/153.3)) is 8.2 or more, the Young's modulus can be increased. This is therefore preferred. It is preferably 8.5 or more, and more preferably 9.0 or more.

When Cl, F, SO₃ and β-OH value (of the glass) are adjusted as shown below, the non-alkali glass of the present invention has an excellent clarification function at the time of glass production, and is suitable for the production of a display substrate glass or a photomask substrate glass having no defects on a surfaces and in the inside thereof.

Specifically, a clarifying effect at the time of melting glass raw materials is improved, and generation of the stirring reboil bubbles and the platinum interface bubbles is suppressed. Further, when the reduced-pressure defoaming method is used at the time of glass production, bubble breakage on the surface of the glass melt is promoted. As a result, enlargement of the bubble layer is suppressed, thereby being able to increase the limit depressurization rate at the time of performing the reduced-pressure defoaming method. Accordingly, the clarification function is improved.

Further, at the time of melting the glass raw materials, silica sand as a raw material of SiO₂ is melted at a lower temperature, and unmelted silica sand does not remain unmelted in the glass melt. When unmelted silica sand remains unmelted in the glass melt, unmelted silica sand comes into a state of entrapped in bubbles generated in the glass melt, so that the clarification function at the time of melting is decreased.

Furthermore, unmelted silica sand entrapped in the bubbles gather together near the surface layer of the glass melt, thereby resulting in a difference in composition ratio of SiO₂ between the surface layer of the glass melt and a portion other than the surface layer to decrease homogeneity of the glass and also flatness.

In the non-alkali glass of the present invention, these problems are solved.

The non-alkali glass of the present invention contains Cl in an amount of from 0.15 to 0.35% by mass.

Incidentally, the Cl content is not the loaded amount in the glass raw materials, but the amount remaining in the glass melt. With respect to this point, the same applies to the F content and SO₃ content described later.

When the Cl content is less than 0.15% by mass, the clarification function at the time of melting the glass raw materials is decreased. It is preferably 0.18% by mass or more, and more preferably 0.20% by mass or more. When the Cl content exceeds 0.35% by mass, the function of suppressing enlargement of the bubble layer is decreased, in the case where the reduced-pressure defoaming method is used at the time of glass production. Further, the β-OH value of the glass tends to be decreased, and it becomes difficult to adjust the β-OH value of the glass to a range described later. It is preferably 0.30% by mass or less, and more preferably 0.27% by mass or less.

The non-alkali glass of the present invention contains F in an amount of from 0.01 to 0.15% by mass.

When the F content is less than 0.01 % by mass, the clarification function at the time of melting the glass raw materials is decreased. Further, at the time of melting the glass raw materials, the temperature at which silica sand as the raw material of SiO₂ is melted is increased, and there is a concern that unmelted silica sand remains unmelted in the glass melt. It is preferably 0.02% by mass or more, and more preferably 0.03% by mass or more.

When the F content exceeds 0.15% by mass, the strain point of the glass produced is decreased. It is preferably 0.10% by mass or less, and more preferably 0.08% by mass or less.

The non-alkali glass of the present invention contains SO₃ in an amount of from 1 to 25 ppm.

When the SO₃ content is less than 1 ppm, the clarification function at the time of melting the glass raw materials is decreased. It is preferably 3 ppm or more, and more preferably 5 ppm or more. When the SO₃ content exceeds 25 ppm, generation of the stirring reboil bubbles cannot be suppressed. At the time of stirring the glass melt, pressure is locally reduced in a downstream side of a stirring blade, so that the solubility of gas components in the glass melt decreased to generate the reboil bubbles. When the SO₃ content exceeds 25 ppm, the solubility of SO₃ in the glass melt is reduced by this local reduction in pressure to generate SO₃ as the reboil bubbles. Further, when the SO₃ content exceeds 25 ppm, in the case where the reduced-pressure defoaming method is used at the time of glass production, bubble breakage on the surface of the glass melt cannot be promoted, and enlargement of the bubble layer cannot be suppressed. It is preferably 23 ppm or less, and more preferably 20 ppm or less.

The β-OH value of the glass is used as an indicator of the water content in the glass. The non-alkali glass of the present invention has a β-OH value of the glass of from 0.15 to 0.45 mm⁻¹.

When the β-OH value (of the glass) is less than 0.15 mm⁻¹, the clarification function at the time of melting the glass raw materials is decreased. Further, at the time of melting the glass raw materials, the temperature at which silica sand as the raw material of SiO₂ is melted is increased, and there is a concern that unmelted silica sand remains unmelted in the glass melt. It is preferably 0.20 mm⁻¹ or more.

When the β-OH value (of the glass) exceeds 0.45 mm⁻¹, generation of the platinum interface bubbles cannot be suppressed. The platinum interface bubbles are generated due to generation of O₂ by a reaction of H₂ that has passed on a wall surface of a flow path of the glass melt, which is made of a platinum material, with water in the glass melt. When the β-OH value of the glass exceeds 0.45 mm⁻¹, the water content in the glass is too high to suppress the generation of O₂ by the reaction of H₂ that has passed on the wall surface of the flow path of the glass melt, which is made of the platinum material, with water in the glass melt. It is preferably 0.40 mm⁻¹ or less, and more preferably 0.30 mm⁻¹ or less.

The β-OH value of the glass can be adjusted by various conditions at the time of melting the glass raw materials, for example, the water content in the glass raw materials, the water vapor concentration in a melting tank, the retention time of the glass melt in a melting tank and the like.

Methods for adjusting the water content in the glass raw materials include a method of using a hydroxide in place of an oxide as the glass raw material (e.g., using magnesium hydroxide (Mg(OH)₂) in place of magnesium oxide (MgO), as a magnesium source).

Further, methods for adjusting the water vapor concentration in the melting tank include a method of using oxygen in place of air, for burning of fuels such as city gas and heavy oil for the purpose of heating the melting tank, and a method of using a mixed gas of oxygen and air.

The non-alkali glass of the present invention does not contain alkali metal oxides in amounts exceeding impurity level (that is to say, does not substantially contain) in order not to allow deterioration in characteristics of a metal or oxide thin film provided on the glass surface at the time of panel production to occur. Further, for the same reason, it is preferred that P₂O₅ is not substantially contained. Furthermore, in order to facilitate recycle of the glass, it is preferred that PbO, As₂O₃ and Sb₂O₃ are not substantially contained.

In addition to the above-mentioned components, the non-alkali glass of the present invention can contain ZnO and Fe₂O₃ in a total amount of 5% or less, in order to improve the meltability and formability (float formability) of the glass.

In the non-alkali glass of the present invention, the strain point is 710°C or higher, preferably 715°C or higher, and more preferably 720°C or higher, so that the thermal shrinkage at the time of panel production can be suppressed. Further, a solid phase crystallization method can be applied as a production method of p-Si TFT.

In the non-alkali glass of the present invention, the strain point is still more preferably 730°C or higher. When the strain point is 730°C or higher, it is suitable for high strain point use (e.g., a display substrate or a lighting substrate for organic EL, or a thin display substrate or lighting substrate having a thickness of 100 µm or less).

In forming of a sheet glass having a thickness of 100 µm or less, the drawing rate at the time of forming tends to become fast, so that the fictive temperature of the glass is increased, and compaction of the glass is liable to be increased. In this case, when the glass is a high strain point glass, the compaction can be suppressed.

Further, in the non-alkali glass of the present invention, the glass transition point is preferably 760°C or higher, more preferably 770°C or higher, and still more preferably 780°C or higher, for the same reason as the strain point.

Furthermore, in the non-alkali glass of the present invention, the average thermal expansion coefficient at from 50 to 300°C is from 30×10⁻⁷ to 43×10⁻⁷/°C, the thermal shock resistance is large, and the productivity at the time of panel production can be increased. In the non-alkali glass of the present invention, the average thermal expansion coefficient at from 50 to 300°C is preferably 35×10⁻⁷/°C or more. The average thermal expansion coefficient at from 50 to 300°C is preferably 42×10⁻⁷/°C or less, more preferably 41 ×10⁻⁷/°C or less, and still more preferably 40×10⁻⁷/°C or less.

In addition, in the non-alkali glass of the present invention, the specific gravity is preferably 2.65 or less, more preferably 2.64 or less, and still more preferably 2.62 or less.

Moreover, in the non-alkali glass of the present invention, the temperature T₂ at which the viscosity η becomes 10² poise (dPa·s) is 1710°C or lower, preferably less than 1710°C, more preferably 1700°C or lower, and still more preferably 1690°C or lower. Melting thereof is therefore relatively easy.

Further, in the non-alkali glass of the present invention, the temperature T₄ at which the viscosity η becomes 10⁴ poise (dPa·s) is 1320°C or lower, preferably 1315°C or lower, more preferably 1310°C or lower, and still more preferably 1305°C or lower. This is suitable for float forming.

Furthermore, in the non-alkali glass of the present invention, the devitrification temperature is preferably 1350°C or lower, because forming by a float process becomes easy. It is preferably 1340°C or lower, and more preferably 1330°C or lower.

The devitrification temperature in the present description is the average value of the maximum temperature at which crystals precipitate on the surface and in the inside of the glass and the minimum temperature at which crystals do not precipitate, which are determined by placing crushed glass particles on a platinum dish, performing heat treatment for 17 hours in an electric furnace controlled to a constant temperature, and performing observation under an optical microscope after the heat treatment.

In addition, in the non-alkali glass of the present invention, the Young's modulus is preferably 84 GPa or more, more preferably 86 GPa or more, still more preferably 88 GPa or more, and yet still more preferably 90 GPa or more.

Moreover, in the non-alkali glass of the present invention, the photoelastic constant is preferably 31 nm/MPa/cm or less.

When the glass substrate has birefringence due to stress generated in a production step of a liquid crystal display panel or at the time of use of a liquid crystal display apparatus, a phenomenon that display of black turns to grey to decrease a contrast of the liquid crystal display is sometimes observed. This phenomenon can be suppressed by adjusting the photoelastic constant to 31 nm/MPa/cm or less. It is preferably 30 nm/MPa/cm or less, more preferably 29 nm/MPa/cm or less, still more preferably 28.5 nm/MPa/cm or less, and particularly preferably 28 nm/MPa/cm or less.

Further, in the non-alkali glass of the present invention, the photoelastic constant is preferably 23 nm/MPa/cm or more, and more preferably 25 nm/MPa/cm or more, considering easiness of securing other physical properties. Incidentally, the photoelastic constant can be measured by a disk compression method.

Further, it is preferred that the non-alkali glass of the present invention has a dielectric constant of 5.6 or more.

In the case of an In-Cell type touch panel (a touch sensor is incorporated in a liquid crystal display panel) as described in JP-A-2011-70092, it is better that the glass substrate has a higher dielectric constant from the standpoints of improvement in sensing sensitivity of the touch sensor, a decrease in drive voltage and electric power saving. When the dielectric constant is 5.6 or more, the sensing sensitivity of the touch sensor is improved. It is preferably 5.8 or more, more preferably 6.0 or more, still more preferably 6.2 or more, and particularly preferably 6.4 or more.

The dielectric constant can be measured according to the method described in JIS C-2141.

The non-alkali glass of the present invention can be produced, for example, by the following method. Raw materials of respective components generally used are mixed so as to obtain the target components, and the resulting mixture is continuously placed in a melting furnace, and heated at 1,500 to 1,800°C to melt it. The molten glass obtained is formed to a predetermined sheet thickness by a float process, followed by annealing and thereafter cutting, thereby being able to obtain a sheet glass.

A reduced-pressure defoaming method is carried out with respect to the glass melt before forming by the float process, as necessary.

The non-alkali glass of the present invention has relatively low meltability, so that the following are preferably used as raw materials of respective components.

### (Silicon Source (Raw Material of SiO₂))

Silica sand can be used as a SiO₂ raw material. When silica sand having a median diameter D₅₀ of from 20 to 27 µm, a ratio of particles having a particle size of 2 µm or less of 0.3% by volume or less and a ratio of particles having a particle size of 100 µm or more of 2.5% by volume or less is used, silica sand can be melted while suppressing aggregation thereof, so that melting of silica sand becomes easy to obtain the non-alkali glass having less bubbles and high homogeneity and flatness. This is therefore preferred.

Incidentally, the "particle size" in the present description means a sphere equivalent size (means a primary particle size, in the present invention) of silica sand, and specifically means a particle size in particle size distribution of a powder measured by a laser diffraction/scattering method.

Further, the "median diameter D₅₀" in the present description means a particle size where, in particle size distribution of a powder measured by a laser diffraction method, volume frequency of particles having a particle size larger than a certain particle size occupies 50% of that of the whole powder. In other words, the term means a particle size at the time when the cumulative frequency is 50% in particle size distribution of a powder measured by a laser diffraction method.

Furthermore, the "ratio of particles having a particle size of 2 µm or less" and the "ratio of particles having a particle size of 100 µm or more" in the present description are measured, for example, by measuring particle size distribution by a laser diffraction/scattering method.

It is more preferred that the median diameter D₅₀ of silica sand is 25 µm or less, because melting of silica sand becomes easier.

In addition, it is particularly preferred that the ratio of particles having a particle size of 100 µm or more in silica sand is 0%, because melting of silica sand becomes easier.

### (Alkali Earth Metal Source)

An alkali earth metal compound can be used as the alkaline earth metal source. Specific examples of the alkaline earth metal compounds include carbonates such as MgCO₃, CaCO₃, BaCO₃, SrCO₃ and (Mg, Ca)CO₃ (dolomite), oxides such as MgO, CaO, BaO and SrO, and hydroxides such as Mg(OH)₂, Ca(OH)₂, Ba(OH)₂ and Sr(OH)₂. It is preferred that the hydroxide of the alkaline earth metal is allowed to be contained in a part or the whole of the alkaline earth metal source, because the amount of an unmelted silica sand at the time of melting the glass raw materials is decreased.

It is more preferred that the content of the hydroxide of the alkaline earth metal is preferably from 15 to 100 mol% (in terms of MO, provided that M is an alkaline earth metal element, hereinafter the same), more preferably from 30 to 100 mol% (in terms of MO), and still more preferably from 60 to 100 mol% (in terms of MO), of 100 mol% of the alkaline earth metal source (in terms of MO), because the amount of the unmelted silica sand at the time of melting the glass raw materials is decreased.

The amount of the unmelted silica sand at the time of melting the glass raw materials is decreased with an increase in the molar ratio of the hydroxide in the alkaline earth metal source. Accordingly, the higher molar ratio of the hydroxide is more preferred.

As the alkaline earth metal source, there can be used, specifically, a mixture of the hydroxide and the carbonate of the alkaline earth metal, the hydroxide alone of the alkaline earth metal, and the like. It is preferred to use at least one of MgCO₃, CaCO₃, and (Mg, Ca)(CO₃)₂ (dolomite) as the carbonate. Further, it is preferred to use at least one of Mg(OH)₂ or Ca(OH)₂ as the hydroxide of the alkaline earth metal, and it is particularly preferred to use Mg(OH)₂.

### (Boron Source (Raw Material of B₂O₃)

When the non-alkali glass contains B₂O₃, a boron compound can be used as the raw material of B₂O₃. Specific examples of the boron compounds include orthoboric acid (H₃BO₃), metaboric acid (HBO₂), tetraboric acid (H₂B₄O₇), boric anhydride (B₂O₃) and the like. In the usual non-alkali glass production, orthoboric acid is used in terms of being inexpensive and easily available.

In the present invention, it is preferred that one containing boric anhydride in an amount of from 10 to 100% by mass (in terms of B₂O₃), of 100% by mass (in terms of B₂O₃) of the boron source, is used as the raw material of B₂O₃. When boric anhydride is contained in an amount of 10% by mass or more, aggregation of the glass raw materials is suppressed, and effects of reducing bubbles and improving homogeneity and flatness are obtained. The amount of boric anhydride is more preferably from 20 to 100% by mass, and still more preferably from 40 to 100% by mass.

As the boron compound other than boric anhydride, orthoboric acid is preferred in terms of being inexpensive and easily available.

### (Sulfuric Acid Source (Raw Material of SO₃))

A sulfate is preferably a sulfate of at least one of cations of various oxides as the glass raw materials of the present invention, that is to say, a sulfate of at least one element selected from Al, Mg, Ca, Sr and Ba, and more preferably a sulfate of an alkali earth metal. Above all, CaSO₄·2H₂O, SrSO₄ and BaSO₄ are particularly preferred, because of their significant function of enlarging the bubbles.

### (Chlorine Source (Raw Material of Cl))

A chloride is preferably a chloride of at least one of cations of various oxides as the glass raw materials of the present invention, that is to say, a chloride of at least one element selected from Al, Mg, Ca, Sr and Ba, and more preferably a chloride of an alkali earth metal. Above all, SrCl₂·6H₂O and BaCl₂·2H₂O are particularly preferred, because of their significant function of enlarging the bubbles and small deliquescence.

### (Fluorine Source (Raw Material of F))

A fluoride is preferably a fluoride of at least one of cations of various oxides as the glass raw materials of the present invention, that is to say, a fluoride of at least one element selected from Al, Mg, Ca, Sr and Ba, and more preferably a fluoride of an alkali earth metal. Above all, CaF₂ is particularly preferred, because of its significant function of improving meltability of the glass raw materials.

### EXAMPLES

### (Examples 1 to 4 and Comparative Examples 1 to 4)

Raw materials of respective components were mixed so as to obtain the target composition shown in Table 1, and melted at a temperature of 1550°C for 1 hour by using a platinum crucible.

Table 1 shows the glass compositions (unit: % by mass, provided that the SO₃ content is in ppm) and the β-OH value of the glass (measured as an indication of the water content in the glass by the following procedure, unit: mm⁻¹). As the particle size of silica sand in the raw materials used at this time, the median particle size D₅₀, the ratio of particles having a particle size of 2 µm or less and the ratio of particles having a particle size of 100 µm or more are also shown together in Table 1. Further, the mass ratio (in terms of MO) of hydroxide raw materials in alkali earth metals is also shown together in Table 1.

### [Measuring Method of β-OH Value]

For a glass sample, the absorbance to a light having a wavelength of 2.75 to 2.95 µm was measured, and the maximum value βₘₐₓ thereof was divided by the thickness (mm) of the sample to determine the β-OH value of the glass.

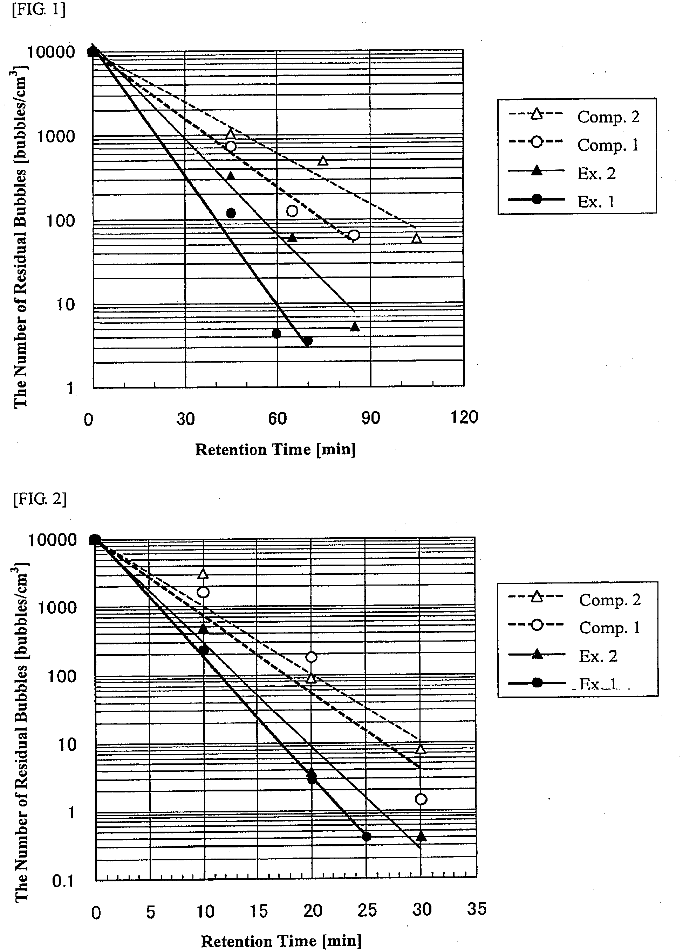

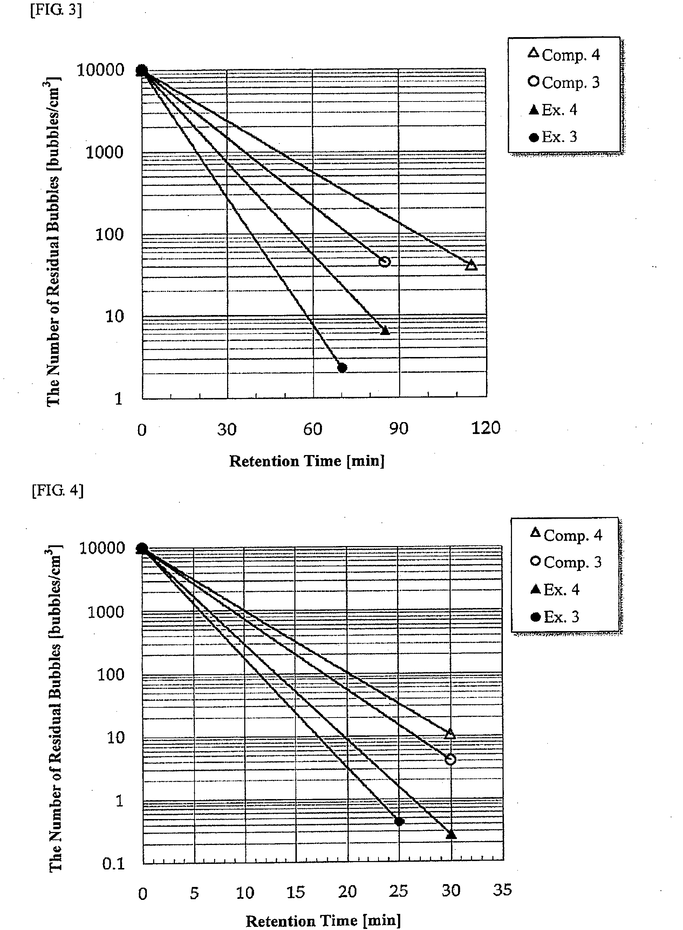

After the same raw material batches as in Examples 1 and 2 and Comparative Examples 1 and 2 were each melted at a temperature of 1500°C for 1 hour by using a platinum crucible, the temperature of the glass melt was maintained at 1550°C or 1670°C, and the number of residual bubbles in the glass melt was measured. Figs. 1 to 4 are graphs showing a relationship between the retention time and the number of residual bubbles. Figs. 1 and 3 show the results at the time when the temperature of the glass melt is maintained at 1550°C, and Figs. 2 and 4 show the results at the time when the temperature of the glass melt is maintained at 1670°C.

**[Table 1]**

| [Table 1] | | | | |
|---|---|---|---|---|
| % by Mass | Ex. 1 | Ex. 2 | Comp. Ex. 1 | Comp. Ex. 2 |
| SiO₂ | 61.5 | 61.4 | 61.5 | 61.4 |
| Al₂O₃ | 21.0 | 20.9 | 21.0 | 20.9 |
| B₂O₃ | 0 | 0 | 0 | 0 |
| MgO | 6.0 | 6.0 | 6.0 | 6.0 |
| CaO | 4.5 | 4.5 | 4.5 | 4.5 |
| SrO | 6.8 | 6.8 | 6.8 | 6.8 |
| BaO | 0 | 0 | 0 | 0 |
| ZrO₂ | 0 | 0 | 0 | 0 |
| (MgO/40.3)+(CaO/56.1)+(SrO/103.6)+(BaO/153.3) | 0.30 | 0.30 | 0.30 | 0.30 |
| (MgO/40.3)/((MgO/40.3)+(CaO/56.1)+(SrO/103.6)+(BaO/153.3)) | 0.51 | 0.51 | 0.51 | 0.51 |
| (MgO/40.3)/((MgO40.3)+(CaO/56.1)) | 0.65 | 0.65 | 0.65 | 0.65 |
| (MgO/40.3)/((MgO/40.3)+(SrO/103.6)) | 0.69 | 0.69 | 0.69 | 0.69 |
| (Al₂O₃×100/102)×(MgO/40.3)/((MgO/40.3)+(CaO/56.1)+(SrO/103.6)+(BaO/153.3)) | 10.4 | 10.4 | 10.4 | 10.4 |
| Cl | 0.20 | 0.31 | 0.13 | 0.47 |
| F | 0.07 | 0.07 | 0.00 | 0.00 |
| SO₃ [ppm] | 10±5 | 10±5 | 10±5 | 10±5 |
| β-OH Value [mm⁻¹] | 0.37 | 0.26 | 0.49 | 0.18 |
| D₅₀ [µm] | 26 | 26 | 26 | 26 |
| Ratio of Particles Having a Particle Size of 2 µm or Less [% by volume] | Less than 0.1% | Less than 0.1% | Less than 0.1% | Less than 0.1% |
| Ratio of Particles Having a Particle Size of 100 µm or Less [% by volume] | 0.6% | 0.6% | 0.6% | 0.6% |
| Ratio (in terms of MO) of Hydroxide Raw Materials in Alkali Earth Metal Source [% by mass] | 61 | 21 | 61 | 21 |

**[Table 2]**

| [Table 1 (cont'd)] | | | | |
|---|---|---|---|---|
| % by Mass | Ex. 3 | Ex. 4 | Comp. Ex. 3 | Comp. Ex. 4 |
| SiO₂ | 61.4 | 61.4 | 61.4 | 61.4 |
| Al₂O₃ | 20.5 | 20.5 | 20.5 | 20.5 |
| B₂O₃ | 1.0 | 1.0 | 1.0 | 1.0 |
| MgO | 5.7 | 5.7 | 5.7 | 5.7 |
| CaO | 4.5 | 4.5 | 4.5 | 4.5 |
| SrO | 6.9 | 6.9 | 6.9 | 6.9 |
| BaO | 0 | 0 | 0 | 0 |
| ZrO₂ | 0 | 0 | 0 | 0 |
| (MgO/40.3)+(CaO/56.1)+(SrO/103.6)+(BaO/153.3) | 0.29 | 0.29 | 0.29 | 0.29 |
| (MgO/40.3)/((MgO/40.3)+(CaO/56.1)+(SrO/103.6)+(BaO/153.3)) | 0.49 | 0.49 | 0.49 | 0.49 |
| (MgO/40.3)/((MgO40.3)+(CaO/56.1)) | 0.64 | 0.64 | 0.64 | 0.64 |
| (MgO/40.3)/((MgO/40.3)+(SrO/103.6)) | 0.68 | 0.68 | 0.68 | 0.68 |
| (Al₂O₃×100/102)×(MgO/40.3)/((MgO/40.3)+(CaO/56.1)+(SrO/103.6)+(BaO/153.3)) | 9.86 | 9.86 | 9.86 | 9.86 |
| Cl | 0.2 | 0.31 | 0.13 | 0.47 |
| F | 0.07 | 0.07 | 0 | 0 |
| SO₃ [ppm] | 10±5 | 10±5 | 10±5 | 10±5 |
| β-OH Value [mm⁻¹] | 0.37 | 0.26 | 0.49 | 0.18 |
| D₅₀ [µm] | 26 | 26 | 26 | 26 |
| Ratio of Particles Having a Particle Size of 2 µm or Less [% by volume] | Less than 0.1% | Less than 0.1% | Less than 0.1% | Less than 0.1% |
| Ratio of Particles Having a Particle Size of 100 µm or Less [% by volume] | 0.6% | 0.6% | 0.6% | 0.6% |
| Ratio (in terms of MO) of Hydroxide Raw Materials in Alkali Earth Metal Source [% by mass] | 61 | 21 | 61 | 21 |

As apparent from Figs. 1 and 2, it has been confirmed that Examples 1 and 2 containing F in an amount of from 0.01 to 0.15% by mass and having a β-OH value of the glass of from 0.15 to 0.45 mm⁻¹ were reduced in the number of residual bubbles in the glass melt, compared to Comparative Examples 1 and 2 in which the F content and the β-OH value of the glass do not satisfy the above-mentioned ranges. Figs. 3 and 4 show calculated values of the number of residual bubbles. It can be confirmed that in Examples 3 and 4, the number of residual bubbles in the glass melts is reduced, compared to that in Comparative Examples 3 and 4.

Then, the same raw material batches as in Examples 1 and 2 and Comparative Examples 1 and 2 were each placed in an amount of 100 g in a platinum boat (400 mm in length × 20 mm in width × 15 mm in height), and heat-treated in a temperature-gradient furnace (from 1000 to 1700°C) for 4 hours. After the platinum boat was taken out, the temperature at which the glass raw materials were completely melted to result in disappearance of unmelted silica sand was visually read.

As a result, with respect to the glasses of Examples 1 and 2, it was 1358°C and 1361°C, respectively, whereas, with respect to the glasses of Comparative Examples 1 and 2, it was 1427°C and 1437°C, respectively. From these results, it has been confirmed that in Examples 1 and 2 in which the glasses contain F in an amount of from 0.01 to 0.15% by mass, the glass raw materials are completely melted to result in disappearance of unmelted silica sand at a lower temperature, compared to Comparative Examples 1 and 2 in which the F content of the glasses does not satisfy the above-mentioned range.

### (Examples 5 to 8)

Raw materials of respective components were mixed so as to obtain the target composition shown in Table 2, melted in a continuous melting furnace, and formed into a sheet shape by a float process. In melting, stirring was performed by using a platinum stirrer to homogenize a glass. Table 2 shows the glass compositions (unit: % by mass, provided that the SO₃ content is in ppm) and the β-OH value of the glass (measured as an indication of the water content in the glass by the above-mentioned procedure, unit: mm⁻¹). As the particle size of silica sand in the raw materials used at this time, the median particle size D₅₀, the ratio of particles having a particle size of 2 µm or less and the ratio of particles having a particle size of 100 µm or more are also shown together in Table 2. Further, the mass ratio (in terms of MO) of hydroxide raw materials in alkali earth metals is also shown together in Table 2.

**[Table 3]**

| [Table 2] | | | | |
|---|---|---|---|---|
| | Ex. 5 | Ex. 6 | Ex. 7 | Ex. 8 |
| SiO₂ | 60.9 | 60.8 | 60.8 | 60.9 |
| Al₂O₃ | 20.5 | 20.4 | 20.3 | 20.1 |
| B₂O₃ | 0.9 | 1.1 | 1.3 | 1.5 |
| MgO | 5.7 | 5.6 | 5.6 | 5.4 |
| CaO | 4.5 | 4.5 | 4.5 | 4.5 |
| SrO | 6.9 | 6.9 | 7.0 | 7.0 |
| BaO | 0.1 | 0.1 | 0.1 | 0.1 |
| ZrO₂ | 0.2 | 0.2 | 0.1 | 0.1 |
| (MgO/40.3)+(CaO/56.1)+(SrO/103.6)+(BaO/153.3) | 0.29 | 0.29 | 0.29 | 0.28 |
| (MgO/40.3)/((MgO/40.3)+(CaO/56.1)+(SrO/103.6)+(BaO/153.3)) | 0.49 | 0.49 | 0.48 | 0.47 |
| (MgO/40.3)/((MgO40.3)+(CaO/56.1)) | 0.64 | 0.63 | 0.63 | 0.63 |
| (MgO/40.3)/((MgO/40.3)+(SrO/103.6)) | 0.68 | 0.68 | 0.67 | 0.67 |
| (Al₂O₃×100/102)×(MgO/40.3)/((MgO/40.3)+(CaO/56.1)+(SrO/103.6)+(BaO/153.3)) | 9.8 | 9.7 | 9.6 | 9.3 |
| Cl | 0.25 | 0.24 | 0.22 | 0.23 |
| F | 0.07 | 0.06 | 0.07 | 0.07 |
| SO₃[ppm] | 10 | 9 | 13 | 9 |
| β-OH Value [mm⁻¹] | 0.24 | 0.24 | 0.24 | 0.24 |
| D₅₀ [µm] | 26 | 26 | 26 | 26 |
| Ratio of Particles Having a Particle Size of 2 µm or Less [% by volume] | Less than 0.1% | Less than 0.1% | Less than 0.1% | Less than 0.1% |
| Ratio of Particles Having a Particle Size of 100 µm or Less [% by volume] | 0.6% | 0.6% | 0.6% | 0.6% |
| Ratio (in terms of MO) of Hydroxide Raw Materials in Alkali Earth Metal Source [% by mass] | 21 | 21 | 21 | 21 |

Further, the glasses of Examples 5 to 8 were prepared by the float process. However, sheet glasses could be obtained without problems of bubbles and devitrification.

### (Reference Examples 1 and 2)

Raw materials of respective components were mixed so as to obtain the target composition shown in Table 3, and melted at a temperature of the temperature T₂ (the temperature at which the viscosity becomes log η=2.0 [dPa·s]) for 4 hours by using a platinum crucible. In melting, stirring was performed by using a platinum stirrer to homogenize a glass, and reduced-pressure defoaming was further performed to obtain a homogeneous bubble-free glass.

Twenty grams of the resulting glass was cut out, and heat-treated at a temperature of the temperature T₃ (the temperature at which the viscosity becomes log η=3.0 [dPa·s]) for 1 minute by using a platinum dish to obtain a state where an interface between the glass and the platinum dish had no bubbles. After the platinum dish was taken out form the electric furnace and cooled, the mass and the specific gravity were measured as the glass was attached to the platinum dish to determine the volume.

Then, the platinum dish was placed in the electric furnace again and heated at the temperature T₃ for 1 hour. After the platinum dish was taken out from the electric furnace at a stage where platinum interface bubbles were generated, and cooled, the mass and the specific gravity were measured again to determine the volume. The volume difference between before and after the heat treatment at the temperature T₃ for 1 hour was taken as the platinum interface bubble volume.

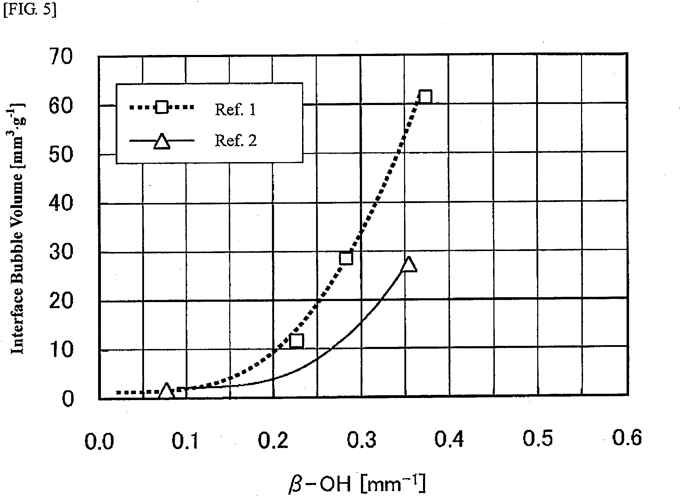

Table 3 shows the glass compositions (unit: % by mass, provided that the SO₃ content is in ppm). With respect to these glasses, glass melts different in the β-OH value were prepared, and a relationship between the β-OH value of the glass and the interface bubble volume was evaluated by the following procedure. Fig. 5 is a graph showing a relationship between the β-OH value of the glass and the interface bubble volume.

**[Table 4]**

| [Table 3] | | |
|---|---|---|
| % by Mass | Reference Example 1 | Reference Example 2 |
| SiO₂ | 61.5 | 61.5 |
| Al₂O₃ | 21.0 | 21.0 |
| B₂O₃ | 0 | 0 |
| MgO | 6.0 | 6.0 |
| CaO | 4.5 | 4.5 |
| SrO | 6.8 | 6.8 |
| BaO | 0 | 0 |
| ZrO₂ | 0 | 0 |
| (MgO/40.3)+(CaO/56.1)+(SrO/103.6)+(BaO/153.3) | 0.30 | 0.30 |
| (MgO/40.3)/((MgO/40.3)+(CaO/56.1)+(SrO/103.6)+(BaO/153.3)) | 0.51 | 0.51 |
| (MgO/40.3)/((MgO40.3)+(CaO/56.1)) | 0.65 | 0.65 |
| (MgO/40.3)/((MgO/40.3)+(SrO/103.6)) | 0.69 | 0.69 |
| (Al₂O₃×100/102)×(MgO/40.3)/((MgO/40.3)+(CaO/56.1)+(SrO/103.6)+(BaO/153.3)) | 10.4 | 10.4 |
| Cl | 0.20 | 0.31 |
| F | 0.07 | 0.00 |
| SO₃[ppm] | 5 to 15 | 5 to 15 |

As a result, it has been confirmed that the glass of Reference Example 1 containing F in an amount of 0.07% by mass is reduced in the volume of platinum interface bubbles, compared to the glass of Reference Example 2 containing no F.

### (Reference Examples 3 and 4)

A sample obtained by mixing raw materials of respective components so as to obtain the target composition shown in Table 4 was placed in an amount of 800 g in a platinum crucible, melted and defoamed under reduced pressure. A stirrer was immersed therein, and one where the sample was allowed to stand for 30 minutes, and meanwhile, another one where the sample was stirred for 30 minutes were prepared. Thereafter, the glass was allowed to flow out and the bubble number was measured. The bubble number α of the glass that was only allowed to stand and not stirred and the bubble number β of the glass that was stirred were evaluated to determine the increment β-α in bubbles between with and without stirring.

As a result, as shown in Table 4, the glass of Reference Example 3 had an increment in bubbles of 1.7 bubbles/g, whereas the glass of Reference Example 4 had an increment in bubbles of 160.9 bubbles/g. From these results, it has been confirmed that in Reference Example 4 containing 30 ppm of SO₃, stirring reboil bubbles are easily generated, compared to Reference Example 3 in which the SO₃ content of the glass satisfies the above-mentioned range.

**[Table 5]**

| [Table 4] | | |
|---|---|---|
| % by Mass | Reference Example 3 | Reference Example 4 |
| SiO₂ | 61.5 | 61.5 |
| Al₂O₃ | 21.0 | 21.0 |
| B₂O₃ | 0 | 0 |
| MgO | 6.0 | 6.0 |
| CaO | 4.5 | 4.5 |
| SrO | 6.8 | 6.8 |
| BaO | 0 | 0 |
| ZrO₂ | 0 | 0 |
| (MgO/40.3)+(CaO/56.1)+(SrO/103.6)+(BaO/153.3) | 0.30 | 0.30 |
| (MgO/40.3)/((MgO/40.3)+(CaO/56.1)+(SrO/103.6)+(BaO/153.3)) | 0.51 | 0.51 |
| (MgO/40.3)/((MgO40.3)+(CaO/56.1)) | 0.65 | 0.65 |
| (MgO/40.3)/((MgO/40.3)+(SrO/103.6)) | 0.69 | 0.69 |
| (Al₂O₃×100/102)×(MgO/40.3)/((MgO/40.3)+(CaO/56.1)+(SrO/103.6)+(BaO/153.3)) | 10.4 | 10.4 |
| Cl | 0.13 | 0.15 |
| F | 0.07 | 0.07 |
| SO₃ [ppm] | 1 to 5 | 30 |
| α [bubbles/g] | 1.0 | 5.3 |
| β [bubbles/g] | 2.6 | 166.2 |
| β-α [bubbles/g] | 1.7 | 160.9 |

### (Reference Examples 5 to 8)

The glasses of Reference Examples 5 to 8 shown in Table 5 were each placed in an amount of 50 g in a quartz beaker having an inner diameter of 41 mm and a height of 60 mm. Thereafter, the quartz beaker was placed in an electric furnace with an observation port, and heated up to 1450°C to melt the glass. Then, the atmospheric pressure of the electric furnace was reduced to a predetermined pressure at a constant rate, taking 10 minutes, and thereafter, maintained constant at the predetermined pressure. During this, a position of a melt glass interface was observed through a camera, and images thereof were recorded at intervals of 5 seconds. After the experiment was terminated, changes in the height of the glass interface with time were measured from the images.

Bubbles in the melt glass are expanded by reducing the pressure in the electric furnace to raise the glass interface. After the predetermined pressure was reached until the bubbles rose and started to arrive at a surface layer, the glass interface was raised at an approximately constant rise rate X [mm/min] under the predetermined constant pressure. This rise rate X increased as the constant pressure was decreased. When it exceeded a certain rate, the melt glass interface overflowed over a brim of the quartz beaker. Experiments of changing the predetermined pressure were repeated, and the limit rise rate Y [mm/min] at which the glass interface just reached the same height as the brim was determined.

The limit rise rate Y of the respective glasses of Reference Examples 5 to 8 is shown in Table 5. When the glass of Reference Example 5 was tested at 1450°C, the glass interface reached the brim of the quartz beaker at a rise rate of 26.4 [mm/min]. The glass interface did not happen to reach the brim of the quartz beaker at a rise rate lower than that.

When the glass of Reference Example 6 was tested at 1450°C , the glass interface reached the brim of the quartz beaker at a rise rate of 32.0 [mm/min]. The glass interface did not happen to reach the brim of the quartz beaker at a rise rate lower than that.

When the glass of Reference Example 7 was tested at 1450°C, the glass interface reached the brim of the quartz beaker at a rise rate of 18.5 [mm/min]. At a rise rate of 26.4 [mm/min], the glass interface overflowed from the vessel over the brim of the quartz beaker.

When the glass of Reference Example 8 was tested at 1450°C, the glass interface reached the brim of the quartz beaker at a rise rate of 22.0 [mm/min]. At a rise rate of 26.4 [mm/min], the glass interface overflowed from the vessel over the brim of the quartz beaker.

The glasses of Reference Examples 5 and 6 are high in the limit rise rate and excellent in bubble breaking properties, compared to the glasses of Reference Examples 7 and 8. As a result, the degree of pressure reduction can be increased, and an excellent reduced-pressure defoaming effect is obtained.

**[Table 6]**

| [Table 5] | | | | |
|---|---|---|---|---|
| % by Mass | Reference Example 5 | Reference Example 6 | Reference Example 7 | Reference Example 8 |
| SiO₂ | 61.7 | 61.0 | 59.5 | 61.6 |
| Al₂O₃ | 20.9 | 20.1 | 17.1 | 20.8 |
| B₂O₃ | 0 | 1.7 | 7.9 | 0 |
| MgO | 5.9 | 4.4 | 3.3 | 5.9 |
| CaO | 4.6 | 5.6 | 4.0 | 4.6 |
| SrO | 6.8 | 6.9 | 7.7 | 6.8 |
| BaO | 0.1 | 0.1 | 0.1 | 0.1 |
| ZrO₂ | 0 | 0 | 0.1 | 0 |
| (MgO/40.3)+(CaO/56.1)+(SrO/103.6)+(BaO/153.3) | 0.29 | 0.28 | 0.23 | 0.29 |
| (MgO/40.3)/((MgO/40.3)+(CaO/56.1)+(SrO/103.6)+(BaO/153.3)) | 0.50 | 0.40 | 0.36 | 0.50 |
| (MgO/40.3)/((MgO40.3)+(CaO/56.1)) | 0.64 | 0.52 | 0.53 | 0.64 |
| (MgO/40.3)/((MgO/40.3)+(SrO/103.6)) | 0.69 | 0.62 | 0.52 | 0.69 |
| (Al₂O₃×100/102)×(MgO/40.3)/((MgO/40.3)+(CaO/56.1)+(SrO/103.6)+(BaO/153.3)) | 10.2 | 7.8 | 6.0 | 10.1 |
| Cl | 0.15 | 0.22 | 0.16 | 0.15 |
| F | 0.03 | 0.05 | 0.07 | 0.03 |
| SO₃ [ppm] | 8 | 9 | 16 | 30 |
| Limit Rise Rate Y [mm/min] | 26.4 | 32.0 | 18.5 | 22.0 |

The present invention has been described in detail with reference to specific embodiments thereof, but it will be apparent to one skilled in the art that various modifications and changes can be made without departing the scope and spirit of the present invention.

The present invention is based on Japanese Patent Application No. 2012-103237 filed on Apr. 27, 2012, the contents of which are incorporated herein by reference.

### INDUSTRIAL APPLICABILITY

The non-alkali glass of the present invention has a high strain point, is formable by a float process, and is suitable for use in display substrates, photomask substrates and the like. Further, it is also suitable for use in solar cell substrates and the like.

## Claims

1. A non-alkali glass having a strain point of 710°C or higher, an average thermal expansion coefficient at from 50 to 300°C of from 30×10⁻⁷ to 43×10⁻⁷/°C, a temperature T₂ at which glass viscosity reaches 10² dPa·s of 1,710°C or lower, a temperature T₄ at which the glass viscosity reaches 10⁴ dPa·s of 1,320°C or lower, comprising, indicated by percentage by mass on the basis of oxides,
| | |
|---|---|
| SiO₂ | 58.5 to 67.5, |
| Al₂O₃ | 18 to 24, |
| B₂O₃ | 0 to 1.7, |
| MgO | 6.0 to 8.5, |
| CaO | 3.0 to 8.5, |
| SrO | 0.5 to 7.5, |
| BaO | 0 to 2.5 and |
| ZrO₂ | 0 to 4.0, |
comprising Cl in an amount of from 0.15 to 0.35% by mass, F in an amount of from 0.01 to 0.15% by mass and SO₃ in an amount of from 1 to 25 ppm and having a β-OH value of the glass of from 0.15 to 0.45 mm⁻¹,
wherein (MgO/40.3)+(CaO/56.1)+(SrO/103.6)+(BaO/153.3) is from 0.27 to 0.35, (MgO/40.3)/((MgO/40.3)+(CaO/56.1)+(SrO/103.6)+(BaO/153.3)) is 0.40 or more, (MgO/40.3)/((MgO/40.3) +(CaO/56.1)) is 0.40 or more, and (MgO/40.3)/((MgO/40.3) +(SrO/103.6)) is 0.60 or more.

2. A non-alkali glass having a strain point of 710°C or higher, an average thermal expansion coefficient at from 50 to 300°C of from 30×10⁻⁷ to 43×10⁻⁷/°C, a temperature T₂ at which glass viscosity reaches 10² dPa·s of 1,710°C or lower, a temperature T₄ at which the glass viscosity reaches 10⁴ dPa·s of 1,320°C or lower, comprising, indicated by percentage by mass on the basis of oxides,
| | |
|---|---|
| SiO₂ | 58 to 66.5, |
| Al₂O₃ | 18 to 24, |
| B₂O₃ | 0 to 1.7, |
| MgO | 3.0 to less than 6.0, |
| CaO | 3.0 to 10, |
| SrO | 0.5 to 7.5, |
| BaO | 0 to 2.5 and |
| ZrO₂ | 0 to 4.0, |
comprising Cl in an amount of from 0.15 to 0.35% by mass, F in an amount of from 0.01 to 0.15% by mass and SO₃ in an amount of from 1 to 25 ppm and having a β-OH value of the glass of from 0.15 to 0.45 mm⁻¹,
wherein (MgO/40.3)+(CaO/56.1)+(SrO/103.6)+(BaO/153.3) is from 0.27 to 0.35, (MgO/40.3)/((MgO/40.3)+(CaO/56.1)+(SrO/103.6)+(BaO/153.3)) is 0.40 or more, (MgO/40.3)/((MgO/40.3) +(CaO/56.1)) is 0.40 or more, (MgO/40.3)/((MgO/40.3) +(SrO/103.6)) is 0.60 or more, and (Al₂O₃×100/102)×(MgO/40.3)/((MgO/40.3)+ (CaO/56.1)+(SrO/103.6)+(BaO/153.3)) is 8.2 or more.

3. A method for producing the non-alkali glass described in claim 1 or 2, wherein silica sand having a median particle size D₅₀ of from 20 µm to 27 µm, a ratio of particles having a particle size of 2 µm or less of 0.3% by volume or less and a ratio of particles having a particle size of 100 µm or more of 2.5% by volume or less is used as a silicon source of a SiO₂ raw material.

4. A method for producing the non-alkali glass described in claim 1 or 2, wherein an alkaline earth metal source containing a hydroxide of an alkaline earth metal in an amount of from 5 to 100% by mass (in terms of MO, provided that M is an alkaline earth metal element, hereinafter the same), of 100% by mass (in terms of MO) of the alkaline earth metal source is used as the alkaline earth metal source of MgO, CaO, SrO and BaO.

5. A method for producing the non-alkali glass described in claim 1 or 2, wherein silica sand having a median particle size D₅₀ of from 20 to 27 µm, a ratio of particles having a particle size of 2 µm or less of 0.3% by volume or less and a ratio of particles having a particle size of 100 µm or more of 2.5% by volume or less is used as a silicon source of a SiO₂ raw material, and an alkaline earth metal source containing a hydroxide of an alkaline earth metal in an amount of from 5 to 100% by mass (in terms of MO, provided that M is an alkaline earth metal element, hereinafter the same), of 100% by mass (in terms of MO) of the alkaline earth metal source is used as the alkaline earth metal source of MgO, CaO, SrO and BaO.
